# FASCICULE DE BREVET EUROPEEN

(11) **EP 0 772 286 B1**
(45) Date de publication et mention de la délivrance du brevet: **19.03.2003**
(21) Numéro de dépôt: 96402322.0
(22) Date de dépôt: 31.10.1996
(51) Int. Cl.: H02M 3/335, H01F 27/22

(54) **Alimentation à haute tension et de forte puissance**
Stromversorgung für grossen Spannungen und grossen Leistungen
Power supply for high voltage and high power

(30) Priorité: 31.10.1995 FR 9512853
(43) Date de publication de la demande: 07.05.1997
(73) Titulaire: Eurofeedback, 91000 Evry (FR)
(72) Inventeur: Safraoui, Georges, 91140 Villejust (FR)
(74) Mandataire: Leszczynski, André

(56) Documents cités:
- EP-A- 0 443 155
- AU-B- 487 591
- GB-A- 2 291 287
- US-A- 4 540 967
- US-A- 4 651 646
- US-A- 4 754 385
- US-A- 4 890 210
- BACKMAN N ET AL: "A NEW LIGHT-WEIGHT 100 A / 48 V THREE-PHASE RECTIFIER" 5 Novembre 1991 , PROCEEDINGS OF THE INTERNATIONAL TELECOMMUNICATIONS ENERGY CONFEREN (INTELEC), KYOTO, NOV. 5 - 8, 1991, NR. CONF. 13, PAGE(S) 92 - 97 , INSTITUTE OF ELECTRICAL AND ELECTRONICS ENGINEERS XP000314563 * page 95 *
- DUSAN SKENDZIC: "TWO TRANSISTOR FLYBACK CONVERTER DESIGN FOR EMI CONTROL" 21 Août 1990 , PROCEEDINGS OF THE INTERNATIONAL SYMPOSIUM ON ELECTROMAGNETIC COMPATIBILITY, WASHINGTON, AUG. 21 - 23, 1990, NR. -, PAGE(S) 130 - 133 , INSTITUTE OF ELECTRICAL AND ELECTRONICS ENGINEERS XP000224643 * page 131; figure 1 *

## Description

La présente invention concerne le domaine des alimentations à haute tension et de forte puissance, destinées notamment à charger rapidement un ou plusieurs condensateurs sous une haute tension.

Plus précisément, l'invention concerne les alimentations capables de délivrer à partir d'une basse ou moyenne tension (typiquement celle du réseau de courant alternatif 110 ou 220 volts) une tension redressée d'au moins plusieurs centaines de volts (typiquement une tension comprise entre 500 et 10.000 volts) sous une puissance de plusieurs centaines ou milliers de watts (typiquement une puissance supérieure à 800 watts). De telles caractéristiques de tension de sortie et de puissance sont nécessaires pour charger rapidement (typiquement au plus quelques secondes) les condensateurs utilisés dans certains lasers par exemple.

Les alimentations à haute tension et de forte puissance connues utilisent un circuit élévateur de tension à découpage du type quasi-résonnant ou du type à résonance, alimenté en entrée par une tension continue filtrée pour délivrer en sortie, au moyen d'un transformateur élévateur de tension et d'interrupteurs électroniques commandables, une haute tension qui est redressée pour obtenir la haute tension souhaitée.

Les circuits élévateurs du type quasi-résonnant et du type à résonance différent par la manière de commander les interrupteurs électroniques. Dans les circuits élévateurs du type à résonance la commutation spontanée d'un interrupteur électronique est provoquée par la commutation commandée inverse d'un autre interrupteur et ces circuits sont généralement symétriques en termes d'excitation du transformateur. Dans les circuits élévateurs du type quasi-résonnant, la commutation spontanée d'un interrupteur est provoquée par l'évolution de grandeurs électriques du circuit élévateur de tension, et ces circuits sont généralement asymétriques en termes d'excitation du transformateur. Le point commun des circuits élévateurs du type quasi-résonnant et du type à résonance est d'utiliser l'inductance de fuite du transformateur élévateur, qui traduit les défauts de couplage entre le primaire et le secondaire du transformateur, pour constituer tout ou partie d'une inductance d'un circuit résonnant LC.

La tension continue redressée filtrée précitée qui sert à alimenter le circuit élévateur à découpage du type quasi-résonnant ou du type à résonance est obtenue au moyen d'un pont de diodes et de condensateurs électrochimiques de filtrage, de forte capacité (typiquement plusieurs milliers de microfarads). Ces condensateurs électrochimiques se comportent, lorsqu'ils sont à l'état non chargé, comme un court-circuit et il est nécessaire de prévoir un circuit capable de limiter le courant d'appel lors de la mise sous tension du pont de diodes.

Par ailleurs, les alimentations à haute tension et de forte puissance connues comportent parfois en amont du circuit élévateur à découpage du type quasi-résonnant ou du type à résonance un circuit de correction du facteur de forme (PFC), destiné à éviter la pollution électromagnétique, par les harmoniques du courant d'entrée, du réseau de courant alternatif sur lequel est branchée l'alimentation.

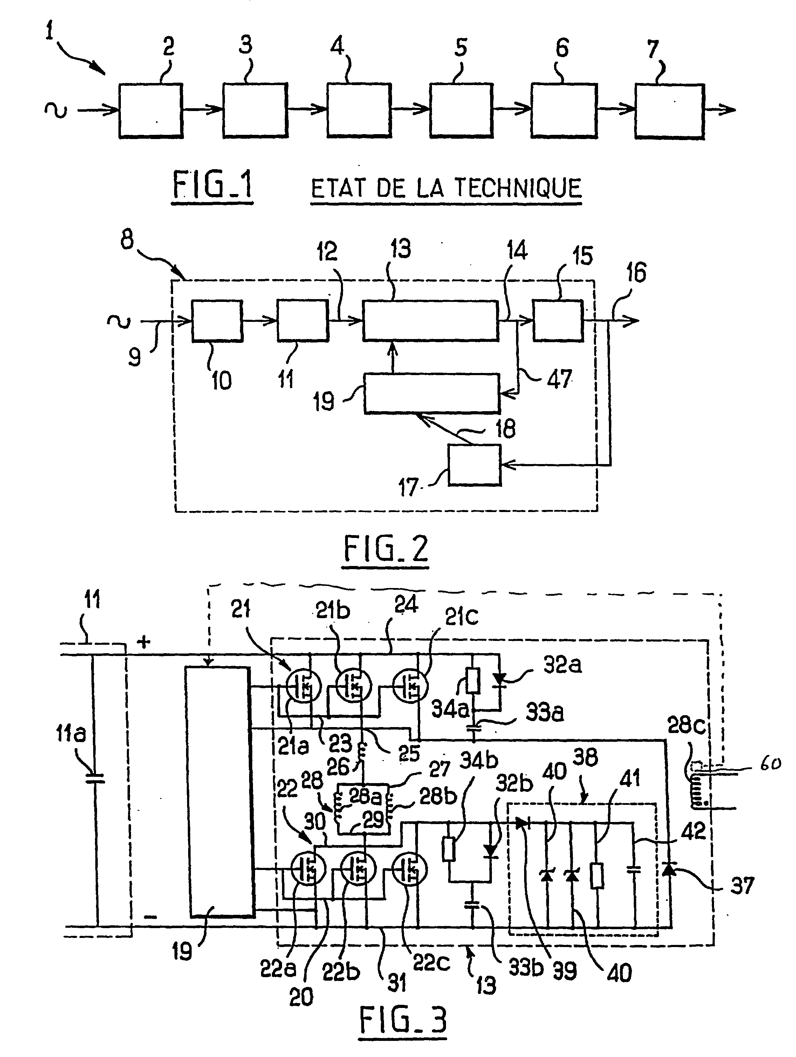

On a représenté de façon schématique sur la figure 1 une alimentation 1 à haute tension et de forte puissance selon l'art antérieur. Cette alimentation 1 comporte en entrée un filtre passe-bas 2 suivi d'un pont de diodes 3, d'un circuit 4 de limitation du courant d'appel, d'un circuit 5 de correction du facteur de forme (PFC), de condensateurs électrochimiques de filtrage 6 et d'un circuit élévateur 7 à découpage du type quasi-résonnant ou du type à résonance qui délivre, grâce à un transformateur élévateur de tension, la haute tension souhaitée.

Une telle alimentation 1 présente de nombreux inconvénients.

En particulier, l'utilisation de condensateurs électrochimiques 6 de forte capacité pour filtrer la tension redressée en aval du pont de diodes 3 et en amont du circuit élévateur 7 rend l'alimentation 1 de prix, de poids et d'encombrement importants. En outre, la durée de vie moyenne des condensateurs électrochimiques 6 est nettement inférieure à celle des autres composants électroniques utilisés dans l'alimentation 1, de sorte qu'ils constituent un facteur limitant concernant la durée de vie de l'alimentation.

En outre, les normes en matière de pollution électromagnétique du réseau de courant alternatif tendent à devenir plus sévères, rendant d'autant plus complexes et coûteux les circuits de correction du facteur de forme (PFC).

Le brevet US 4 754 385 décrit une alimentation capable de délivrer une tension de large magnitude. L'alimentation comporte un circuit de régulation PWM pour réguler la tension de sortie à une valeur de consigne. Les passages par zéro du courant au secondaire du transformateur sont détectés au moyen d'un transformateur de courant. Une telle alimentation n'est pas spéciallement adaptée à charger des condensateurs de forte capacité sous une haute tension, notamment en raison du mode de régulation et de l'emploi du transformateur de courant.

La présente invention a notamment pour objet de remédier aux inconvénients précités.

Elle y parvient en proposant une alimentation telle que définie dans la revendication 1.

Dans l'invention, l'énergie associée à l'inductance de fuite est dissipée sans qu'il soit nécessaire de l'intégrer dans une inductance faisant partie d'un circuit résonnant.

A la différence des alimentations de forte puissance et à haute tension connues, une alimentation à haute tension et de forte puissance conforme à l'invention utilise un circuit élévateur de tension du type non résonnant, c'est-à-dire sans circuit résonnant LC.

De préférence l'alimentation comporte au moins deux interrupteurs électroniques et une diode de roue libre est associée à l'un desdits interrupteurs électroniques et un circuit d'écrêtage est associé à l'autre desdits interrupteurs électroniques, ce circuit d'écrêtage étant apte à limiter l'excursion en tension aux bornes de l'interrupteur électronique auquel il est associé tout en étant apte à suivre les variations de la tension de sortie du circuit redresseur.

Dans une réalisation avantageuse de l'invention, ledit circuit d'écrêtage est constitué par un réseau RCD.

Il est possible grâce à l'invention d'alimenter le circuit élévateur de tension par une tension redressée non filtrée, présentant des ondulations dont l'amplitude est d'au moins 100 volts, donc d'éviter l'emploi de condensateurs électrochimiques de filtrage de forte capacité. Il n'est alors plus nécessaire de prévoir un circuit de limitation du courant d'appel. L'alimentation selon l'invention est également non polluante en ce qu'elle ne génère pas d'harmoniques du courant d'entrée qui rendraient nécessaire l'emploi d'un filtre de correction du facteur de forme (PFC). Il est remarquable que ces caractéristiques peuvent être obtenues malgré le fait que la tension en sortie de l'alimentation varie d'une tension pratiquement nulle au début de la charge du ou des condensateurs à charger pour atteindre une tension élevée en fin de charge de ce ou ces condensateurs.

Le primaire et le secondaire du transformateur élévateur sont avantageusement imbriqués et l'inductance de fuite du transformateur est inférieure ou égale à 10 % de l'inductance propre du primaire ou du secondaire.

Dans une réalisation préférée de l'invention, le secondaire du transformateur élévateur comporte un enroulement imbriqué entre deux enroulements du primaire dudit transformateur, reliés électriquement en parallèle et le circuit magnétique ne comporte aucun entrefer dans l'espace intérieur aux enroulements. Le transformateur élévateur comporte un ou plusieurs organes de dissipation thermique collés sur l'armature en matériau magnétique du transformateur. Le transformateur élévateur comporte des entrefers situés à l'extérieur des enroulements du transformateur élévateur et réalisés de préférence en un matériau isolant électrique mais conducteur thermique.

L'invention a encore pour objet l'utilisation d'une alimentation telle que précitée pour charger un ou plusieurs condensateurs.

D'autres caractéristiques et avantages de la présente invention ressortiront de la lecture de la description détaillée qui va suivre, d'un exemple de réalisation non limitatif de l'invention, et de l'examen du dessin annexé sur lequel :
- la figure 1, précédemment décrite, illustre l'état de la technique,
- la figure 2 est un schéma d'une alimentation conforme à l'invention,
- la figure 3 est un schéma d'un exemple de circuit élévateur de tension utilisé dans une alimentation conforme à l'invention,
- la figure 4 est un schéma d'un exemple de circuit redresseur haute tension utilisé en sortie du circuit élévateur de tension dans une alimentation conforme à l'invention,
- la figure 5 illustre l'allure de la tension en entrée du circuit élévateur, et
- la figure 6 est une vue en coupe axiale du transformateur élévateur de tension.

On a représenté de façon schématique sur la figure 2 une alimentation 8 conforme à l'invention. Cette alimentation 8 se branche en 9 sur un réseau domestique ou industriel alternatif de tension nominale 220 volts et de fréquence nominale 50 Hz. Bien entendu, on peut sans sortir du cadre de l'invention adapter l'alimentation 8 à son branchement sur un réseau 110 volts 60 Hz, sur un réseau triphasé 380 volts ou encore sur tout autre réseau basse ou moyenne tension.

Le courant alternatif reçu en 9 est redressé en 10 de façon classique au moyen d'un pont de diodes.

La tension redressée est filtrée en 11 pour éliminer les signaux haute fréquence. Dans l'exemple de réalisation décrit, le filtrage haute fréquence est effectué après redressement. Ce filtrage haute fréquence est avantageusement effectué au moyen de plusieurs condensateurs 11a du type à film plastique de faible capacité (typiquement quelques microfarads). Dans l'exemple décrit, le filtrage haute fréquence est effectué au moyen de six condensateurs de 1,5 microfarads reliés en parallèle.

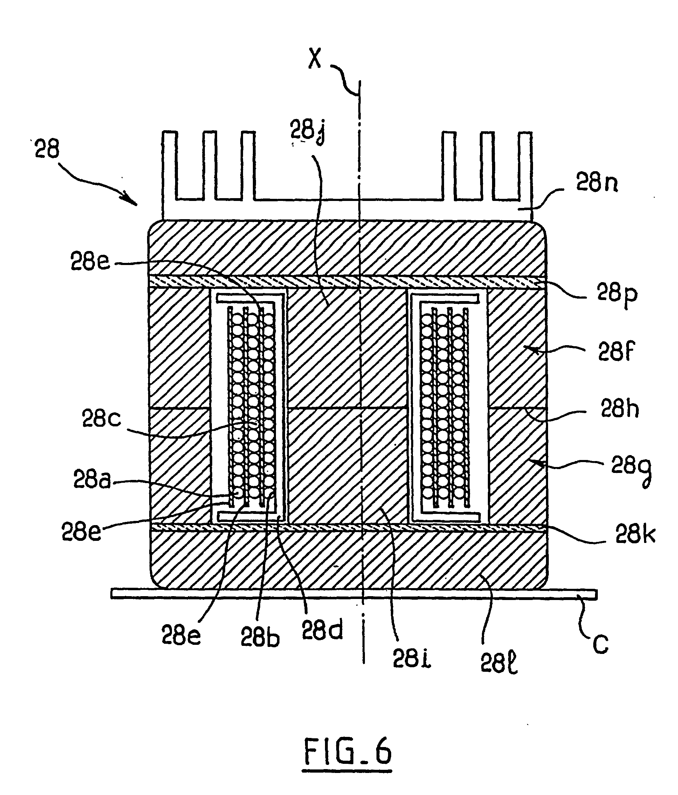

Contrairement à ce qui est rencontré dans la technique antérieure, il n'est pas nécessaire dans l'invention de filtrer la tension redressée double alternance par le pont de diodes en 10 , et la tension redressée obtenue en 12 après filtrage haute fréquence présente, en fonction du temps, des ondulations de forte amplitude comme représenté sur la figure 5. A titre indicatif, dans l'exemple décrit, la tension redressée ondule entre 0 et 320 volts.

Un circuit élévateur de tension 13 comprenant un transformateur élévateur de tension est alimenté par la tension redressée précitée et délivre en sortie en 14 une haute tension qui est redressée en 15 pour charger sous une haute tension en 16 un condensateur non représenté.

Dans le cas où l'alimentation est utilisée pour charger un ou plusieurs condensateurs, la tension en sortie de l'alimentation croît depuis une valeur presque nulle au début de la charge du condensateur, supposé complètement déchargé.

L'alimentation 8 comporte également, dans l'exemple décrit, des moyens 17 pour lire la tension de sortie en 16 et la comparer avec une valeur de consigne en vue de délivrer un signal d'erreur 18 à des moyens de commande 19 agencés pour piloter le circuit élévateur de tension 13 jusqu'à ce que la tension en sortie soit égale à une tension prédéterminée.

Les moyens de commande 19 reçoivent également un signal 47 représentatif du courant parcourant le secondaire du transformateur élévateur de tension. Ce signal peut être obtenu à partir d'une mesure de tension aux bornes d'une résistance parcourue par le courant à mesurer dans le cas d'un enroulement unique au secondaire comme représenté sur les figures. L'alimentation peut également comporter plusieurs enroulements au secondaire, associés chacun à un circuit redresseur. On peut alors, en disposant ces circuits redresseurs selon un montage série, délivrer une haute tension correspondant à la somme des tensions délivrées par chacun des circuits redresseurs. Toutefois, dans le cas où le transformateur élévateur comporte plusieurs enroulements au secondaire, il est préférable de mesurer le flux magnétique dans le transformateur lié aux courants parcourant les secondaires, car l'on peut alors utiliser une sonde unique pour l'ensemble des enroulements du secondaire. Lorsque le flux magnétique détecté par la sonde est nul, on sait que les courants dans tous les enroulements secondaires sont nuls. On peut utiliser comme sonde un capteur à effet Hall par exemple.

On a représenté plus particulièrement sur la figure 3 le circuit élévateur de tension 13.

Ce circuit comporte un premier interrupteur électronique 21 constitué dans l'exemple décrit par la mise en parallèle de trois transistors MOSFET 21a, 21b, 21c, et un deuxième interrupteur électronique 22 constitué par la mise en parallèle de trois autres transistors MOSFET 22a, 22b, 22c.

Le premier interrupteur électronique 21 est commandable par application d'un signal électrique approprié en 23 sur la grille des transistors MOSFET pour établir un passage de courant entre le pôle positif 24 de la tension redressée délivrée en aval de l'étage de filtrage haute fréquence 11 et une borne 25 d'un enroulement 26. L'autre borne de cet enroulement 26 est reliée à une première borne 27 du primaire d'un transformateur 28 élévateur de tension. Le deuxième interrupteur électronique 22 est commandé par application d'un signal électrique approprié en 20 sur la grille des transistors MOSFET pour établir un passage de courant entre le pôle négatif 31 de la tension redressée délivrée en aval de l'étage de filtrage haute fréquence 11 et la deuxième borne 29 du primaire du transformateur 28.

Un premier circuit d'antiparasitage et d'amortissement est associé au premier interrupteur électronique 21. ce circuit est constitué d'une diode 32a reliée par son anode au pôle positif 24 et par sa cathode à une borne d'un condensateur 33a. L'autre borne du condensateur 33a est reliée à la borne 25 de l'enroulement 26 précité. La diode 32a est montée en parallèle avec une résistance 34a. Un deuxième circuit d'antiparasitage et d'amortissement identique au premier est associé au deuxième interrupteur électronique 22. Ce dernier est disposé entre les bornes 30 et 31 du deuxième interrupteur électronique 22, et comporte une diode 32b dont l'anode est reliée à la borne 30 du deuxième interrupteur électronique 22 et la cathode est reliée à une borne d'un condensateur 33b. L'autre borne du condensateur 33b est reliée au pôle négatif 31. La diode 32b est montée en parallèle avec une résistance 34b.

Une diode de roue libre 37 est associée au premier interrupteur électronique 21. La diode 37 a sa cathode reliée à la borne 25 de l'enroulement 26 et son anode reliée au pôle négatif 31. Cette diode limite la tension maximum sur l'interrupteur 21 à la tension obtenue en 12.

Un réseau d'écrêtage 38 est associé au deuxième interrupteur électronique 22. Ce réseau est relié d'une part à la borne 30 du deuxième interrupteur électronique 22 et d'autre part au pôle négatif 31 et permet de limiter l'excursion de la tension aux bornes du deuxième interrupteur électronique 22 en dissipant l'énergie emmagasinée dans l'inductance de fuite. Le réseau 38 est dans l'exemple décrit du type RCD et comporte une diode 39 reliée par son anode à la borne 30 du deuxième interrupteur électronique 22 et par sa cathode à un ensemble constitué de diodes ZENER 40, d'une résistance 41 et d'un condensateur 42 montés en parallèle. Dans l'exemple de réalisation décrit, R = 15 kOhms et c = 0,47 microfarads.

La diode de roue libre 37 et le réseau d'écretage 38 peuvent être omis lorsque les interrupteurs électroniques sont suffisamment performants en termes de tenue à la tension.

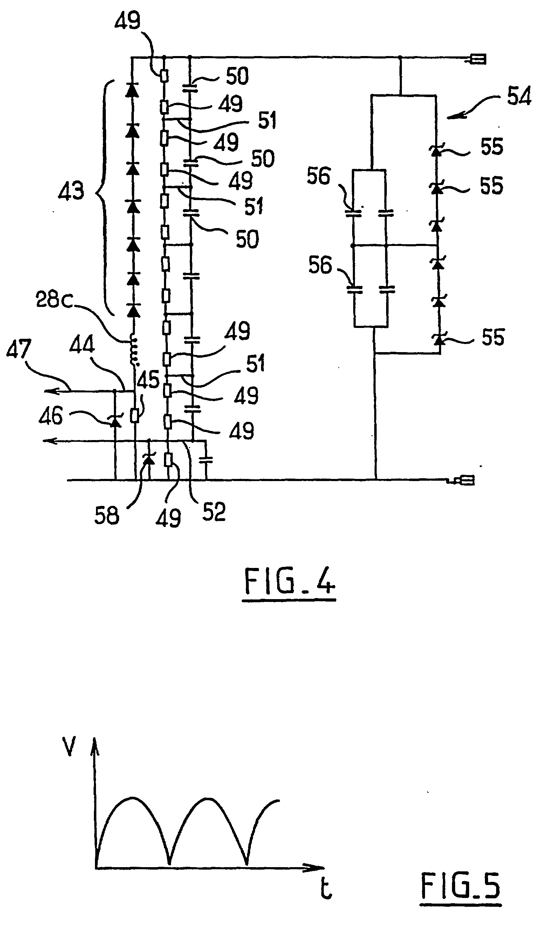

Le primaire du transformateur 28 est constitué dans l'exemple de réalisation décrit par deux enroulements 28a, 28b reliés en parallèle et le secondaire est constitué par un seul enroulement 28c qui est relié, comme représenté sur la figure 4, à une extrémité, à un ensemble de diodes de redressement 43 disposées en série et à l'autre extrémité, en 44, à une résistance 45 et une diode ZENER 46-associées en parallèle. Le transformateur 28 réalise un isolement galvanique entre les parties moyenne et haute tension de l'alimentation 8.

La résistance 45 permet de mesurer une tension représentative du courant qui parcourt l'enroulement 28c.

La tension de sortie de l'alimentation 8 est mesurée au moyen d'un diviseur de tension comportant une pluralité de résistances 49 reliées en série et un ensemble de condensateurs 50 reliés en série et disposés chacun en parallèle avec deux résistances 49 consécutives, à l'exception d'un condensateur 50 qui est relié à l'un des pôles de sortie de l'alimentation et disposé en parallèle avec une résistance 49 et une diode ZENER 58. Une tension représentative de la tension de sortie de l'alimentation 8 est mesurée aux bornes de cette résistance et dirigée en 52 vers les moyens de commande 19.

Un circuit limiteur de tension 54 est disposé entre les pôles de sortie de l'alimentation pour éviter l'apparition d'une tension excessive en l'absence de charge. Ce circuit limiteur comporte une succession de diodes ZENER 55 montées en série et reliées par groupe de trois en parallèle avec des condensateurs 56.

L'homme du métier reconnaîtra dans le circuit élévateur 13 un agencement de convertisseur de tension voisin d'un agencement de type FLYBACK.

Toutefois, à la différence d'un agencement de type FLYBACK connu, l'interrupteur électronique 22 n'est pas associé à l'instar de l'interrupteur électronique 21 à une diode de roue libre selon une configuration de type demi-pont asymétrique, mais au réseau RCD 38.

Le circuit élévateur 13 utilise un transformateur 28 comportant, comme mentionné plus haut, un primaire constitué par deux enroulements 28a, 28b reliés électriquement en parallèle, et un secondaire constitué par un enroulement 28c imbriqué entre les deux enroulements 28a et 28b du primaire. Dans l'exemple décrit, les deux enroulements 28a et 28b comportent un même nombre de spires.

On a représenté sur la figure 6, le transformateur 28, en coupe dans un plan contenant l'axe des enroulements 28a, 28b et 28c.

Le transformateur 28 comporte une carcasse 28d servant au bobinage des enroulements 28a, 28b et 28c. Ces derniers sont séparés par des feuillards 28e en un matériau isolant électrique.

L'armature en matériau magnétique du type ferrite est constituée par l'assemblage de deux blocs 28f et 28g présentant dans le plan de coupe de la figure 6 chacun la forme d'un E. Les branches des E sont collées ensemble à leurs extrémités en 28h, sans ménager d'entrefer, à la différence des transformateurs connus dont l'armature est constituée par l'assemblage de deux blocs en forme de E. Les deux branches centrales des E, référencées 28i et 28j, constituent un noyau magnétique s'étendant axialement sur toute la longueur des enroulements 28a, 28b et 28c.

Une plaque 28k constituant entrefer sépare les trois branches du bloc inférieur 28g de la base 281 de ce dernier. Une plaque 28p constituant entrefer sépare les trois branches du bloc supérieur du reste de ce dernier, comme représenté sur la figure 6.

Un dissipateur thermique à ailettes 28n est collé sur la face supérieure du bloc supérieur 28f.

Dans l'exemple décrit, la plaque 28p est constituée par deux plaquettes superposées de 1 mm d'épaisseur, chacune en céramique, et la plaque 28 k est réalisée en résine époxy et fait 1 mm d'épaisseur.

Le transformateur 28 est destiné à être monté sur une plaque de circuit imprimé C au moyen d'un cerclage non représenté s'appliquant sur la périphérie des blocs 28fet 28g. L'utilisation d'une plaque 28k en résine époxy pour constituer l'entrefer séparant les branches du bloc 28g de la base 281 permet avantageusement de réduire les contraintes mécaniques s'exerçant sur les plaquettes en céramique constituant l'entrefer supérieur.

Les interrupteurs électroniques 21 et 22 sont commandés simultanément en commutation par les moyens de commande 19 pour établir ou rompre un passage de courant dans les enroulements 28a et 28b du primaire du transformateur 28. L'enroulement 26 précité est traversé par le courant parcourant le primaire du transformateur 28 et est couplé à un enroulement non représenté, agencé pour permettre aux moyens de commande 19 de suivre l'évolution du courant dans le primaire du transformateur 28 et interrompre le fonctionnement du circuit élévateur 13 en cas de surintensité.

Les interrupteurs électroniques 21 et 22 découpent le courant d'alimentation du primaire du transformateur 28 à une fréquence qui est de l'ordre de 30 KHz dans l'exemple décrit.

Avantageusement les interrupteurs 21 et 22 sont commandés en saturation lors du passage par zéro du courant au secondaire du transformateur 28. On parle de commutation douce. Ce type de commutation permet avantageusement de réduire les contraintes énergétiques subies par les transistors MOSFET et évite un vieillissement prématuré de ces derniers.

La surveillance du courant au secondaire en vue de réaliser la commutation douce des interrupteurs électroniques 21 et 22 est effectuée grâce au signal recueilli en 47. L'homme du métier notera que la commutation douce permet avantageusement d'utiliser des diodes de redressement 43 moyennement rapides (c'est-à-dire dont le temps de recouvrement est de l'ordre de 150ns) et bon marché.

On remarquera que l'utilisation d'une résistance 45 pour suivre le courant au secondaire présente l'avantage d'avoir un temps de réponse quasi-instantané, ce qui est avantageux car la tension en sortie de l'alimentation est appelée à varier lorsque cette dernière est utilisée pour charger des condensateurs. On a représenté en pointillés sur la figure 3 un capteur à effet Hall 60 pouvant être utilisée en remplacement de la résistance 45 lorsqu'il y a plusieurs enroulements au secondaire.

La tension aux bornes du ou des condensateurs à charger évolue relativement lentement comparativement à la période du réseau de courant alternatif auquel est branchée l'alimentation. Plus précisément, dans l'exemple décrit, le temps nécessaire pour atteindre 90 % de la charge du condensateur est supérieur à 5 fois la période du réseau alternatif.

Les moyens de commande 19 reçoivent en 18 un signal représentatif de l'écart entre la tension aux bornes du condensateur à charger et une tension de consigne programmée par l'utilisateur. Les moyens de commande 19 sont agencés pour interrompre ou ralentir les cycles de commutation des interrupteurs électroniques 21 et 22 lorsque la tension de consigne est atteinte ou approchée.

Finalement, l'invention permet de disposer d'une alimentation de poids, d'encombrement et de coût réduits par rapport aux alimentations de l'art antérieur capables de délivrer une puissance moyenne supérieure ou égale à 800 watts sous une tension supérieure ou égale à 500 volts.

Chaque alimentation est vue par le réseau de courant alternatif comme une charge résistive et il est possible de relier plusieurs alimentations conformes à l'invention pour les disposer en parallèle et augmenter la puissance de sortie.

Bien entendu, on peut apporter diverses modifications à l'exemple de réalisation décrit sans sortir du cadre de la présente invention.

On peut notamment remplacer les transistors MOSFET par d'autres transistors utilisables en commutation, par exemple des transistors du type IGBT.

On peut également modifier le transformateur élévateur 28, en veillant néanmoins à ce que l'inductance de fuite reste suffisamment faible pour un fonctionnement correct du circuit élévateur 13, et de préférence inférieure à 10 % de la valeur de l'inductance propre de chacun des enroulements.

## Revendications

1. Alimentation délivrant une haute tension redressée d'au moins 500 Volts sous une puissance d'au moins 800 Watts pour charger un ou plusieurs condensateurs de forte capacité relié(s) à l'alimentation sous ladite haute tension, la tension en sortie de l'alimentation variant d'une tension pratiquement nulle au début de la charge du ou des condensateurs à charger à une tension de consigne en fin de charge, comprenant un circuit redresseur de courant à relier à une source de courant alternatif, un circuit élévateur de tension (13) comportant au moins un interrupteur électronique commandable (21, 22) et un transformateur élévateur de tension (28) comportant un primaire (28a; 28b) relié électriquement audit interrupteur électronique et des moyens de commande (19) dudit interrupteur électronique, agencés pour découper le courant parcourant ledit primaire de manière à recueillir, aux bornes d'au moins un enroulement (28c) au secondaire dudit transformateur, une haute tension, les moyens de commande étant agencés pour interrompre les cycles de commutation des interrupteurs électroniques lorsque la tension de consigne est atteinte, ledit circuit élévateur (13) étant du type non résonnant, ladite source de courant alternatif n'étant pas filtrée au moyen de condensateurs électrochimiques de forte capacité, l'alimentation comportant en outre une résistance ou un capteur à effet Hall pour détecter les passages par zéro du courant dans le ou les enroulements secondaires (28c), lesdits moyens de commande étant agencés pour synchroniser la commutation du ou desdits interrupteurs électroniques au passage par zéro du courant parcourant le ou les enroulements secondaires (28c).

2. Alimentation selon la revendication 1, **caractérisée par le fait que** le primaire dudit transformateur (28) comporte deux enroulements (28a; 28b) reliés électriquement en parallèle.

3. Alimentation selon la revendication 2, **caractérisée par le fait que** le secondaire dudit transformateur (28) comporte un enroulement (28c) imbriqué entre lesdits deux enroulements du primaire (28a, 28b).

4. Alimentation selon l'une quelconque des revendications 1 à 3, **caractérisée par le fait que** l'inductance de fuite dudit transformateur élévateur (28) est inférieure ou égale à 10 % de l'inductance propre de chacun des enroulements.

5. Alimentation selon l'une quelconque des revendications 1 à 4, **caractérisée par le fait que** ledit circuit élévateur de tension (13) comporte deux interrupteurs électroniques commandables (21, 22) reliés électriquement en série avec ledit primaire (28a ; 28b) dont un premier interrupteur électronique (21) relié au pôle positif de sortie (24) du circuit redresseur (10, 11) et à une borne dudit primaire et un deuxième interrupteur électronique (22) relié à l'autre borne dudit primaire et au pôle négatif de sortie (31) du circuit redresseur (10,11).

6. Alimentation selon la revendication 5, **caractérisée par le fait que** le circuit élévateur de tension comporte au moins un circuit d'écrêtage (38) associé au deuxième interrupteur électronique, apte à limiter l'excursion en tension aux bornes de cet interrupteur électronique et une diode de roue libre (37) associée audit premier interrupteur électronique (21).

7. Alimentation selon l'une quelconque des revendications 1 à 6, **caractérisée par le fait que** ledit transformateur élévateur (28) comporte une armature en matériau magnétique et des organes de dissipation thermique collés sur ladite armature.

8. Alimentation selon l'une quelconque des revendications 1 à 7, **caractérisée par le fait que** ledit transformateur élévateur (28) comporte des entrefers disposés à l'extérieur des enroulements du transformateur élévateur et réalisés de préférence dans un matériau conducteur thermique et isolant électrique.

9. Alimentation selon l'une quelconque des revendications 1 à 8, **caractérisée par le fait que** la tension redressée en sortie dudit circuit redresseur (10, 11) et en amont du circuit élévateur de tension (13) présente des ondulations dont l'amplitude est d'au moins 100 volts.

## Claims

1. A power supply outputting a rectified high voltage of at least 500V under a power of at least 800W to charge one or more capacitors of high capacity connected to the power supply at said high voltage, the output voltage varying from a voltage of substantially zero at the beginning of the charge of the one or more capacitors to charge to a set voltage at the end of the charge, comprising a current rectifier circuit for connecting to an AC source, a voltage step-up circuit (13) including at least one controllable electronic switch (21, 22) and a voltage step-up transformer (28) including a primary winding (28a ; 28b) electrically connected to said electronic switch, and control means (19) for controlling said electronic switch, organized to chop the current flowing through said primary winding in such a manner as to enable a high voltage to be taken from across the terminals of at least one secondary winding (28c) of said transformer, the control means being arranged to stop the commutation cycles of the electronic switches when the set voltage is reached, the step-up circuit (13) being of the non-resonant type, said AC source being not filtered with high capacity electrochemical capacitors, the power supply comprising further one resistor or Hall effect sensor to detect the passages by zero of the current in the one or plurality of secondary windings (28c), said control means being arranged to synchronize the commutation of said one or plurality of electronic switches at the passage by zero of the current flowing through the one or plurality of secondary windings (28c).

2. A power supply according to claim 1, **characterized by** the fact that the primary of said transformer (28) comprises two windings (28a, 28b) electrically connected in parallel.

3. A power supply according to claim 2, **characterized by** the fact that the secondary of said transformer (28) comprises a winding (28c) interleaved between said two primary windings (28a, 28b).

4. A power supply according to any one of claims 1 to 3, **characterized by** the fact that the leakage inductance of said step-up transformer (28) is less than or equal to 10% of the self-inductance of each of the windings.

5. A power supply according to any one of claims 1 to 4, **characterized by** the fact that said step-up circuit (13) includes two controllable electronic switches (21, 22) electrically connected in series with said primary winding (28a, 28b), a first one of the electronic switches (21) being connected to the positive output rail (24) from the rectifier circuit (10, 11) and to one terminal of said primary winding, and a second electronic switch (22) being connected to the other terminal of said primary winding and to the negative output rail (31) of the rectifier circuit (10, 11).

6. A power supply according to claim 5, **characterized by** the fact that the step-up circuit includes at least one limiter circuit (38) associated with the second electronic switch, suitable for limiting the voltage excursion across the terminals of said electronic switch and a free-wheel diode (37) associated with said first electronic switch (21).

7. A power supply according to any one of claims 1 to 6, **characterized by** the fact that said step-up transformer (28) has a magnetic circuit of magnetic material and has heat dissipating members stuck to said magnetic circuit.

8. A power supply according to any one of claims 1 to 7, **characterized by** the fact that said step-up transformer (28) includes gaps located outside the windings of the step-up transformer and preferably made of a material that conducts heat and that is electrically insulating.

9. A power supply according to any one of claims 1 to 8, **characterized by** the fact that the rectified voltage at the output from said rectifier circuit (10, 11) and upstream from the step-up circuit (13), includes ripple with an amplitude of at least 100 volts.

## Patentansprüche

1. Stromversorgung. die eine gleichgerichtete Hochspannung von wenigstens 500 Volt bei einer Leistung von wenigstens 800 Watt liefert, zum Aufladen eines oder mehrerer mit der Stromversorgung verbundener Kondensatoren von hoher Kapazität mit der genannten Hochspannung, wobei die Spannung am Ausgang der Stromversorgung zwischen einer Spannung von praktisch null am Beginn der Aufladung des oder der aufzuladenden Kondensatoren bis zu einer vorgegebenen Spannung am Ende der Aufladung variiert, mit einer Stromgleichrichterschaltung, die mit einer Wechselstromquelle zu verbinden ist, einer Spannungserhöhungsschaltung (13), die wenigstens einen steuerbaren elektronischen Schalter (21, 22) und einen Spannungserhöhungstransformator (28) mit einer Primärseite (28a; 28b) aufweist, die elektrisch mit dem genannten elektronischen Schalter verbunden ist, und mit Steuermitteln (19) des elektronischen Schalters, die dazu ausgebildet sind, den in der genannten Primärseite fließenden Strom derart abzuschneiden, daß an den Klemmen mindestens einer Sekundärwicklung (28c) des Transformators eine hohe Spannung erhalten wird, wobei die Steuermittel dazu ausgebildet sind, die Umschaltzyklen der elektronischen Schalter zu unterbrechen, wenn die vorgegebene Spannung erreicht ist, die Spannungserhöhungsschaltung (13) von der Bauart ohne Resonanz ist, die genannte Wechselstromquelle nicht mit Hilfe von elektrochemischen Kondensatoren mit hoher Kapazität gefiltert ist, die Stromversorgung außerdem einen Widerstand oder eine Hallsonde zum Detektieren der Nulldurchgänge des in der oder den Sekundärwicklungen (28c) fließenden Stromes aufweist und die Steuermittel dazu ausgebildet sind, die Umschaltung des oder der elektronischen Schalter mit dem Nulldurchgang des durch die Sekundärwicklung(en) (28c) fließenden Stromes zu synchronisieren.

2. Stromversorgung nach Anspruch 1, **dadurch gekennzeichnet, daß** die Primärseite des Transformators (28) zwei Wicklungen (28a; 28b) aufweist, die elektrisch parallel geschaltet sind.

3. Stromversorgung nach Anspruch 2, **dadurch gekennzeichnet, daß** die Sekundärseite des Transformators (28) eine Wicklung (28c) aufweist, die zwischen den beiden Primärwicklungen (28a, 28b) eingeschachtelt ist.

4. Stromversorgung nach einem der Ansprüche 1 bis 3, **dadurch gekennzeichnet, daß** die Leckinduktivität des Spannungserhöhungstransförmators (28) kleiner oder gleich 10% der Selbstinduktivität Jeder der Wicklungen ist.

5. Stromversorgung nach einem der Ansprüche 1 bis 4, **dadurch gekennzeichnet, daß** die Spannungserhöhungsschaltung (13) zwei steuerbare elektronische Schalter (21, 22) aufweist, die elektrisch mit der Primärseite (28a; 28b) in Reihe geschaltet sind und von denen ein erster elektronischer Schalter (21) mit dem positiven Ausgangspol (24) der Gleichrichterschaltung (10, 11) und einer Klemme der Primärseite elektrisch in Reihe geschaltet ist und ein zweiter elektronischer Schalter (22) mit der anderen Klemme der Primärseite und dem negativen Ausgangspol (31) der Gleichrichterschaltung (10, 11) verbunden ist.

6. Stromversorgung nach Anspruch 5, **dadurch gekennzeichnet, daß** die Spannungserhöhungsschaltung wenigstens eine Begrenzungsschaltung (38), die mit dem zweiten elektronischen Schalter verbunden und dazu ausgebildet ist, das Überschießen der Spannung an den Klemmen dieses elektronischen Schalters zu begrenzen, sowie eine Freilaufdiode (37) aufweist, die mit dem genannten ersten elektronischen Schalter (21) verbunden ist.

7. Stromversorgung nach einem der Ansprüche 1 bis 6, **dadurch gekennzeichnet, daß** der Spannungserhöhungstransformator (28) einen Kern aus magnetischem Material und Wärmedissipationsorgane aufweist, die an diesen Kern angeklebt sind.

8. Stromversorgung nach einem der Ansprüche 1 bis 7, **dadurch gekennzeichnet, daß** der Spannungserhöhungstransformator (28) Eisenspalte aufweist, die außerhalb der Wicklungen des Spannungserhöhungstransformators angeordnet und vorzugsweise aus einem wärmeleitenden und elektrisch isolierenden Material hergestellt sind.

9. Stromversorgung nach einem der Ansprüche 1 bis 8, **dadurch gekennzeichnet, daß** die gleichgerichtete Spannung am Ausgang der Gleichrichtschaltung (10, 11) und stromauf der Spannungserhöhungsschaltung (13) Ondulationen aufweist, deren Amplitude wenigstens 100 Volt beträgt.
